# EUROPEAN PATENT APPLICATION

(11) **EP 3 735 056 A1**
(43) Date of publication of application: **04.11.2020**
(21) Application number: 18917089.7
(22) Date of filing: 04.05.2018
(51) Int. Cl.: H04W 68/00

(54) **WIRELESS COMMUNICATION METHOD, COMMUNICATION DEVICE, CHIP AND SYSTEM**

(71) Applicant: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Penza, Giancarlo
(86) International application number: PCT/CN2018/085698
(87) International publication number: WO 2019/210517

(57) **Abstract**

Provided are a wireless communication method, a communication device, a chip, and a system, wherein same can reduce the complexity and power consumption of a UE. The method is applied to a terminal device that is in a connected mode. The method comprises: the terminal device receiving dedicated signaling sent by a network device; and the terminal device acquiring updated system broadcast information according to the dedicated signaling. According to the wireless communication method of the embodiments of the present invention, a terminal device that is in a connected mode acquires the changed system broadcast information by receiving dedicated signaling sent by a network device, thereby avoiding the acquisition of change indication information broadcast by a system by means of acquiring a paging message, and thus reducing the complexity and power consumption of a UE.

## Description

### BACKGROUND

### Technical Field

Embodiments of the present invention relate to the communications field, and more specifically, to a wireless communications method, a communications device, a chip, and a system.

### Related Art

People are in pursuit of rate, delay, high-speed mobility, and energy efficiency and services in future life are diversified and complicated. The 3rd Generation Partnership Project (3GPP) international standard organization begins to research and develop the fifth-generation (5G) mobile communications technology accordingly. In discussion of the release 15 (R15) of 5G New Radio (NR), a maximum channel bandwidth of each NR carrier is uniformed. Specifically, a maximum channel bandwidth of a low-frequency carrier is 100 megahertzes (MHz), a maximum channel bandwidth of a high-frequency carrier is 400 MHz, and 100 MHz/400 MHz channel bandwidths are continuous. It may be found that, if user equipment (UE) keeps operating on a broadband carrier, power consumption of the UE is quite large.

To resolve the foregoing problem, the concept of bandwidth part (BWP) is introduced, and a radio frequency (RF) bandwidth of the UE may be adjusted according to an actual throughput of the UE. For example, if the UE is at a quite low rate, a relatively small bandwidth may be configured for the UE. For another example, if the UE requires a quite high rate, a relatively large bandwidth may be configured for the UE. For another example, if the UE supports a high rate or operates in a carrier aggregation (CA) mode, a plurality of BWPs may be configured for the UE. Therefore, the UE is enabled to support adjustment in the RF bandwidth of the UE, to optimize the power of the UE, and the UE is enabled to support Frequency Division Multiplexing (FDM) of different air interface access technologies.

In current standards, the UE monitors a downlink control channel through a paging-radio network temporary identifier (P-RNTI) and then obtains a paging message, so as to obtain updated system broadcast information according to system broadcast change indication information in the paging message. However, a unique objective of obtaining the paging message by the UE in connected mode is to obtain the system broadcast change indication information, which increases complexity and power consumption of the UE.

Therefore, how to reduce complexity and power consumption of the UE is a problem that needs to be resolved urgently.

### SUMMARY

A wireless communications method, a communications device, a chip, and a system are provided, to reduce complexity and power consumption of UE.

According to a first aspect, a wireless communication method is provided, where the method is applied to a terminal device in connected mode, and the method includes:
receiving, by the terminal device, dedicated signaling sent by a network device; and
obtaining, by the terminal device, updated system broadcast information according to the dedicated signaling.

In the wireless communications method of this embodiment of the present invention, by receiving the dedicated signaling sent by the network device, the terminal device in connected mode obtains changed system broadcast information, to avoid a case in which system broadcast change indication information is obtained in a manner of obtaining a paging message, thereby reducing complexity and power consumption of the UE.

In some possible implementations, the dedicated signaling includes the updated system broadcast information.

In some possible implementations, before the receiving, by the terminal device, dedicated signaling sent by a network device, the method further includes:
receiving, by the terminal device, first indication information sent by the network device, where the first indication information is used for instructing the terminal device to stop monitoring a downlink control channel through a paging-radio network temporary identifier (P-RNTI) and/or a system information-radio network temporary identifier (SI-RNTI).

In some possible implementations, the dedicated signaling includes system broadcast change indication information;
the obtaining, by the terminal device, updated system broadcast information according to the dedicated signaling includes:
monitoring, by the terminal device, a downlink control channel on a next periodic boundary of system broadcast through an SI-RNTI according to the system broadcast change indication information in the dedicated signaling, to obtain the updated system broadcast information; and
the method further includes:
   stopping, by the terminal device after obtaining the updated system broadcast information, monitoring the downlink control channel through the SI-RNTI.

In some possible implementations, before the receiving, by the terminal device, dedicated signaling sent by a network device, the method further includes:
receiving, by the terminal device, second indication information sent by the network device, where the second indication information is used for instructing the terminal device to stop monitoring a downlink control channel through a P-RNTI.

In some possible implementations, the system broadcast change indication information includes at least one of the following indication information:
system information (SI) change indication information, change indication information of each system information block (SIB), earthquake and tsunami warning system (ETWS) change indication information, and commercial mobile alert system (CMAS) change indication information.

In some possible implementations, the dedicated signaling includes: dedicated downlink control information (DCI) signaling and/or dedicated radio resource control (RRC) signaling.

According to a second aspect, a wireless communications method is provided, including:
determining, by a network device, to update system broadcast information; and
sending, by the network device, dedicated signaling to a terminal device in connected mode, where the dedicated signaling is used by the terminal device to obtain the updated system broadcast information.

In some possible implementations, the dedicated signaling includes the updated system broadcast information.

In some possible implementations, before the sending, by the network device, dedicated signaling to a terminal device, the method further includes:
generating, by the network device, first indication information, where the first indication information is used for instructing the terminal device to stop monitoring a downlink control channel through a paging-radio network temporary identifier (P-RNTI) and/or a system information-radio network temporary identifier (SI-RNTI); and
sending, by the network device, the first indication information to the terminal device.

In some possible implementations, the dedicated signaling includes system broadcast change indication information.

In some possible implementations, before the sending, by the network device, dedicated signaling to a terminal device, the method further includes:
generating, by the network device, second indication information, where the second indication information is used for instructing the terminal device to stop monitoring a downlink control channel through a P-RNTI; and
sending, by the network device, the second indication information to the terminal device.

In some possible implementations, the system broadcast change indication information includes at least one of the following indication information:
system information (SI) change indication information, change indication information of each system information block (SIB), earthquake and tsunami warning system (ETWS) change indication information, and commercial mobile alert system (CMAS) change indication information.

In some possible implementations, the dedicated signaling includes: dedicated downlink control information (DCI) signaling and/or dedicated radio resource control (RRC) signaling.

According to a third aspect, a communications device is provided. The communications device is configured to perform the method according to either of the first aspect and the second aspect or the method according to any one of the foregoing possible implementations.

In some possible implementations, the communications device includes:
functional modules configured to perform the method according to either of the first aspect and the second aspect or the method according to any one of the foregoing possible implementations.

In some possible implementations, the communications device is a terminal device, and the terminal device is configured to perform the method according to the first aspect or any one of the foregoing possible implementations in the first aspect.

In some possible implementations, the communications device is a network device, and the network device is configured to perform the method according to the second aspect or any one of the foregoing possible implementations in the second aspect.

According to a fourth aspect, a communications device is provided, including:
a processor, configured to invoke a computer program from a memory and run the computer program, where the computer program is used for performing the method according to either of the first aspect and the second aspect or the method according to any one of the foregoing possible implementations.

In some possible implementations, the communications device further includes:
a memory, where the memory is configured to store the computer program.

In some possible implementations, the communications device is a terminal device, and the terminal device is configured to perform the method according to the first aspect or any one of the foregoing possible implementations in the first aspect.

In some possible implementations, the communications device is a network device, and the network device is configured to perform the method according to the second aspect or any one of the foregoing possible implementations in the second aspect.

According to a fifth aspect, a chip is provided. The chip is configured to perform the method according to either of the first aspect and the second aspect or the method according to any one of the foregoing possible implementations.

In some possible implementations, the chip includes:
a processor, configured to invoke a computer program from a memory and run the computer program, where the computer program is used for performing the method according to either of the first aspect and the second aspect or the method according to any one of the foregoing possible implementations.

In some possible implementations, the chip further includes:
a memory, where the memory is configured to store the computer program.

According to a sixth aspect, a computer-readable storage medium is provided. The storage medium is configured to store a computer program, and the computer program is used for performing the method according to either of the first aspect and the second aspect or the method according to any one of the foregoing possible implementations.

According to a seventh aspect, a computer program product is provided. The computer program product includes a computer program instruction, and the computer program is used for performing the method according to either of the first aspect and the second aspect or the method according to any one of the foregoing possible implementations.

According to an eighth aspect, a computer program is provided. When the computer program is run on a computer, the computer is enabled to perform the method according to either of the first aspect and the second aspect or the method according to any one of the foregoing possible implementations.

According to a ninth aspect, a communications system is provided, including a network device and a terminal device, where
the network device is configured to send, when determining to update system broadcast information, dedicated signaling to the terminal device in connected mode; and
the terminal device is configured to: receive the dedicated signaling sent by the network device, and obtain the updated system broadcast information according to the dedicated signaling.

In some possible implementations, the terminal device is configured to perform the method according to the first aspect or the method according to any one of the foregoing possible implementations, and the network device is configured to perform the method according to the second aspect or each implementation in the second aspect.

### BRIEF DESCRIPTION OF THE DRAWINGS

FIG. 1 shows an example of an application scenario according to an embodiment of the present invention.
FIG. 2 is a schematic flowchart of a wireless communications method according to an embodiment of the present disclosure.
FIG. 3 is a schematic block diagram of a communications device according to an embodiment of the present invention.
FIG. 4 is another schematic block diagram of a communications device according to an embodiment of the present invention.
FIG. 5 is another schematic block diagram of a communications device according to an embodiment of the present invention.
FIG. 6 is a schematic block diagram of a chip according to an embodiment of the present invention.
FIG. 7 is a schematic block diagram of a system according to an embodiment of the present invention.

### DETAILED DESCRIPTION

The technical solutions in the embodiments of this application are described clearly with reference to the accompanying drawings in the embodiments of this application below.

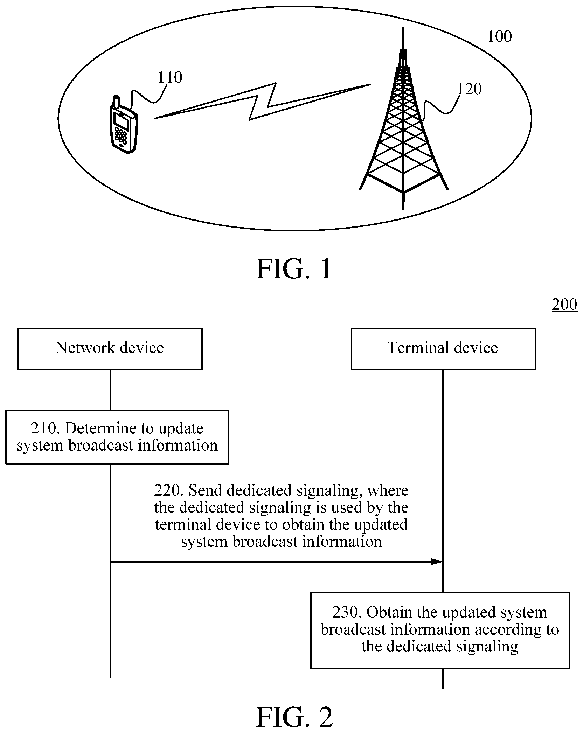

FIG. 1 is a schematic diagram of an application scenario according to an embodiment of this application.

As shown in FIG. 1, a communications system 100 may include a terminal device 110 and a network device 120. The network device 120 may communicate with the terminal device 110 through an air interface. Multi-service transmission is supported between the terminal device 110 and the network device 120.

It should be understood that, this embodiment of the present invention is exemplarily described by using only the communications system 100, but this embodiment of the present invention is not limited thereto. In other words, the technical solutions of the embodiments of the present invention may be applied to various communications systems, such as: a Global System for Mobile Communications (GSM), a Code Division Multiple Access (CDMA) system, a Wideband Code Division Multiple Access (WCDMA) system, a General Packet Radio Service (GPRS), a Long Term Evolution (LTE) system, an LTE Time Division Duplex (TDD) system, a Universal Mobile Telecommunications System (UMTS), a Worldwide Interoperability for Microwave Access (WiMAX) communications system, a New Radio (New Radio, NR) system, and a future 5G communications system.

Using a 5G system as an example, the technical solutions of the embodiments of this application may be applied to a wide-area LTE coverage mode and an NR island coverage mode. Moreover, because a large quantity of LTE is deployed below 6 GHz, frequency spectrums below 6 GHz that may be used for 5G are rare. Therefore, in NR, application of frequency spectrums above 6 GHz needs to be researched, but high frequency bands have limited coverage and quick signal fading. Moreover, to protect early investment of mobile operators in LTE, an operating mode of tight interworking between LTE and NR is proposed.

Main application scenarios of 5G include: enhanced mobile broadband (eMBB), ultra-reliable and low-latency communication (URLLC), and massive machine type communication (mMTC). The eMBB aims to obtain multimedia content, services, and data for a user, and requirements for the eMBB are increased very quickly. The eMBB may be deployed in different scenarios, for example, an indoor scenario, a city scenario, and a countryside scenario, and differences between capabilities and between requirements of the eMBB are relatively large. Therefore, the eMBB cannot be treated as the same, and may be analyzed in detail with reference to specific deployment scenarios. Typical applications of the URLLC include: industrial automation, power automation, remote medical operations (surgeries), traffic safety guarantee, and the like. The mMTC is typically characterized by including: a high connection density, a small data volume, a delay-insensitive service, low costs and long service lives of modules, and the like.

In the communications system 100 shown in FIG. 1, the network device 120 may be an access network device communicating with the terminal device 110. The access network device may provide communications coverage to a particular geographic area, and may communicate with the terminal device 110 (for example, UE) located within the coverage area.

For example, the access network device may be a base transceiver station (BTS) in a Global System for Mobile communications (GSM) system or Code Division Multiple Access (CDMA), or may be a NodeB (NB) in a Wideband Code Division Multiple Access (WCDMA) system, or may be an evolved NodeB (eNB or eNodeB) in a Long Term Evolution (LTE) system.

Optionally, the access network device may be a next generation radio access network (NG RAN), a base station (gNB) in an NR system, or a wireless controller in a cloud radio access network (CRAN), or the access network device may be a relay station, an access point, an in-vehicle device, a wearable device, a network device in a future evolved public land mobile network (PLMN), or the like.

The terminal device 110 may be any terminal device. The terminal device 110 may communicate with one or more core networks through a radio access network (RAN), and may also be referred to as an access terminal, user equipment (UE), a subscriber unit, a subscriber station, a mobile station, a mobile console, a remote station, a remote terminal, a mobile device, a user terminal, a terminal, a wireless communications device, a user agent, or a user apparatus. For example, the terminal device may be a cellular phone, a cordless phone, a Session Initiation Protocol (SIP) phone, a wireless local loop (WLL) station, a personal digital assistant (PDA), a handheld device having a wireless communication function, a computing device, another processing device connected to a wireless modem, an in-vehicle device, a wearable device, or a terminal device in a 5G network.

It should be understood that, terms "system" and "network" in this specification are usually interchangeably used in this specification.

FIG. 2 is a schematic flowchart of a wireless communications method 200 according to an embodiment of this application. A terminal device shown in FIG. 2 may be a terminal device shown in FIG. 1, and a network device shown in FIG. 2 may be an access network device shown in FIG. 1. It should be understood that, the terminal device shown in FIG. 2 may be a terminal device in connected mode. The method 200 includes some or all of the following content:
As shown in FIG. 2, the method 200 includes the following steps.

210. A network device determines to update system broadcast information.

220. The network device sends dedicated signaling to a terminal device, where the dedicated signaling is used by the terminal device to obtain the updated system broadcast information.

230. The terminal device obtains the updated system broadcast information according to the dedicated signaling.

Specifically, the terminal device in connected mode needs to monitor a change in system broadcast information on only a primary cell (PCell). Therefore, the network device may directly configure the updated system broadcast information for the UE in connected mode through the dedicated signaling.

More specifically, the terminal device in connected mode gathers the updated system broadcast information on only an activated BWP. Optionally, the network device may configure a plurality of dedicated BWPs, for example, four BWPs for the UE in connected mode. An initial BWP may be one of the four dedicated BWPs. The UE performs switching between the four BWPs through downlink control information (DCI). Therefore, a BWP on which the UE in connected mode camps is indeterminate, and depends on scheduling on a network side.

In the wireless communications method of this embodiment of the present invention, by receiving the dedicated signaling sent by the network device, the terminal device in connected mode obtains changed system broadcast information, to avoid a case in which system broadcast change indication information is obtained in a manner of obtaining a paging message, thereby reducing complexity and power consumption of the UE.

The dedicated signaling in this embodiment of the present invention is exemplarily described below:
Optionally, the dedicated signaling may include: dedicated downlink control information (DCI) signaling and/or dedicated radio resource control (RRC) signaling. It should be understood that, the dedicated DCI signaling and the dedicated RRC signaling are only exemplarily described, and a specific form of the dedicated signaling may be any downlink signaling specially sent to the terminal device.

In an embodiment, the dedicated signaling includes the updated system broadcast information.

Further, before sending the dedicated signaling to the terminal device, the network device may generate first indication information, where the first indication information is used for instructing the terminal device to stop monitoring a downlink control channel through a paging-radio network temporary identifier (P-RNTI) and/or a system information-radio network temporary identifier (SI-RNTI); and the network device sends the first indication information to the terminal device. Particularly, the first indication information may be used for instructing the terminal device to stop monitoring a downlink control channel through a paging-radio network temporary identifier (P-RNTI) and a system information-radio network temporary identifier (SI-RNTI).

In other words, before the terminal device receives the dedicated signaling sent by the network device, the terminal device receives the first indication information sent by the network device. Therefore, the terminal device is prevented from obtaining the updated system broadcast information in a manner of monitoring the downlink control channel through the paging-radio network temporary identifier (P-RNTI) and the system information-radio network temporary identifier (SI-RNTI), and therefore complexity and power consumption of the UE can be reduced.

In another embodiment, the dedicated signaling includes system broadcast change indication information.

Therefore, the terminal device may monitor a downlink control channel on a next periodic boundary of system broadcast through an SI-RNTI according to the system broadcast change indication information in the dedicated signaling, to obtain the updated system broadcast information. Further, after obtaining the updated system broadcast information, the terminal device may stop monitoring the downlink control channel through the SI-RNTI.

Further, before sending the dedicated signaling to the terminal device, the network device may generate second indication information, where the second indication information is used for instructing the terminal device to stop monitoring a downlink control channel through a paging-radio network temporary identifier (P-RNTI); and the network device sends the second indication information to the terminal device.

In other words, before the terminal device receives the dedicated signaling sent by the network device, the terminal device receives the second indication information sent by the network device. Therefore, the terminal device is prevented from obtaining the system broadcast change indication information in a manner of monitoring the downlink control channel through the paging-radio network temporary identifier (P-RNTI), and therefore complexity and power consumption of the UE can be reduced.

Optionally, by way of example but not limitation, the system broadcast change indication information includes at least one of the following indication information:
system information (SI) change indication information, change indication information of each system information block (SIB), earthquake and tsunami warning system (ETWS) change indication information, and commercial mobile alert system (CMAS) change indication information.

Preferred implementations of this application are described above in detail with reference to accompanying drawings, but this application is not limited to specific details in the foregoing implementations. A plurality of simple variants may be made to the technical solutions of this application within the technical concept scope of this application, and these simple variants all fall within the protection scope of this application.

For example, specific technical characteristics described in the foregoing specific implementations may be combined in any appropriate manner without contradiction. To avoid unnecessary repetition, various possible combination manners are not further described in this application.

For another example, various different implementations of this application may also be randomly combined with each other, provided that the combination does not depart from the idea of this application. The combination should be similarly considered as content disclosed by this application.

It should be understood that sequence numbers of the foregoing processes do not mean execution sequences in various method embodiments of this application. The execution sequences of the processes should be determined according to functions and internal logic of the processes, and should not be construed as any limitation on the implementation processes of the embodiments of this application.

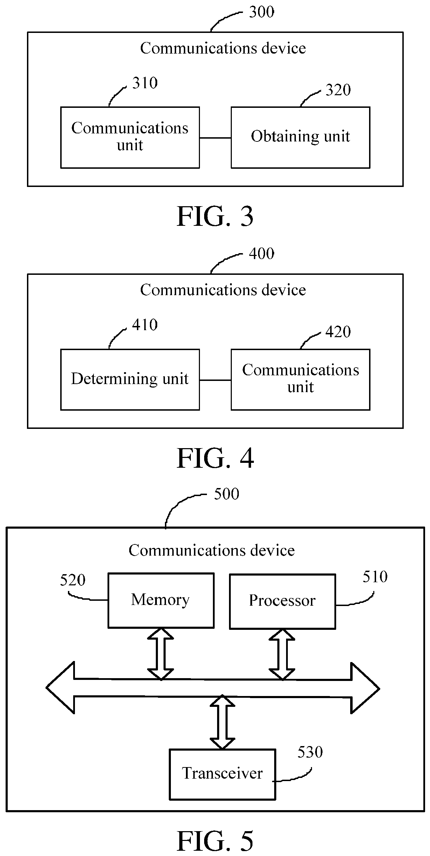

The method embodiments of this application are described above in detail with reference to FIG. 2, and apparatus embodiments of this application are described below in detail with reference to FIG. 3 to FIG. 5.

FIG. 3 is a schematic block diagram of a communications device 300 according to an embodiment of the present invention. Optionally, the communications device 300 is a terminal device in connected mode.

Specifically, as shown in FIG. 3, the communications device 300 may include:
a communications unit 310, configured to receive dedicated signaling sent by a network device; and
an obtaining unit 320, configured to obtain updated system broadcast information according to the dedicated signaling.

Optionally, the dedicated signaling includes the updated system broadcast information.

Optionally, the communications unit 310 is further configured to:
receive, before receiving the dedicated signaling sent by the network device, first indication information sent by the network device, where the first indication information is used for instructing the terminal device to stop monitoring a downlink control channel through a paging-radio network temporary identifier (P-RNTI) and/or a system information-radio network temporary identifier (SI-RNTI).

Optionally, the dedicated signaling includes system broadcast change indication information;
the obtaining unit 320 is specifically configured to:
monitor a downlink control channel on a next periodic boundary of system broadcast through an SI-RNTI according to the system broadcast change indication information in the dedicated signaling, to obtain the updated system broadcast information; and
the communications unit 310 is further configured to:
   stop, by the terminal device after obtaining the updated system broadcast information, monitoring the downlink control channel through the SI-RNTI.

Optionally, the communications unit 310 is further configured to:
receive, before receiving the dedicated signaling sent by the network device, second indication information sent by the network device, where the second indication information is used for instructing the terminal device to stop monitoring a downlink control channel through a P-RNTI.

Optionally, the system broadcast change indication information includes at least one of the following indication information:
system information (SI) change indication information, change indication information of each system information block (SIB), earthquake and tsunami warning system (ETWS) change indication information, and commercial mobile alert system (CMAS) change indication information.

Optionally, the dedicated signaling includes: dedicated downlink control information (DCI) signaling and/or dedicated radio resource control (RRC) signaling.

FIG. 4 is a schematic block diagram of another communications device according to an embodiment of the present invention.

As shown in FIG. 4, the communications device 400 may include:
a determining unit, configured to determine to update system broadcast information; and
a communications unit, configured to send dedicated signaling to a terminal device in connected mode, where the dedicated signaling is used by the terminal device to obtain the updated system broadcast information.

Optionally, the dedicated signaling includes the updated system broadcast information.

Optionally, before the communications unit sends the dedicated signaling to the terminal device, the determining unit is further configured to:
generate first indication information, where the first indication information is used for instructing the terminal device to stop monitoring a downlink control channel through a paging-radio network temporary identifier (P-RNTI) and/or a system information-radio network temporary identifier (SI-RNTI); and the communications unit is further configured to send the first indication information to the terminal device.

Optionally, the dedicated signaling includes system broadcast change indication information.

Optionally, before the communications unit sends the dedicated signaling to the terminal device, the determining unit is further configured to:
generate second indication information, where the second indication information is used for instructing the terminal device to stop monitoring a downlink control channel through a P-RNTI; and the communications unit is further configured to send the second indication information to the terminal device.

Optionally, the system broadcast change indication information includes at least one of the following indication information:
system information (SI) change indication information, change indication information of each system information block (SIB), earthquake and tsunami warning system (ETWS) change indication information, and commercial mobile alert system (CMAS) change indication information.

Optionally, the dedicated signaling includes: dedicated downlink control information (DCI) signaling and/or dedicated radio resource control (RRC) signaling.

It should be understood that, the apparatus embodiments and the method embodiments correspond to each other, and for a similar description, reference is made to the method embodiments. Specifically, The communications device 300 shown in FIG. 3 and the communications device 400 shown in FIG. 4 may correspond to a corresponding body in the method 200 according to the embodiments of this application, and the foregoing and other operations and/or functions of the communications device 300 and the communications device 400 are respectively intended to implement corresponding procedures of the method shown in FIG. 2. For simplicity, details are not described herein again.

The communications devices of the embodiments of this application are described above from the perspective of functional modules with reference to FIG. 3 and FIG. 4. It should be understood that, the functional modules may be implemented in a hardware form, may be implemented through an instruction in a software form, or may be implemented through a combination of hardware and software modules.

Specifically, the steps of the method embodiment of the embodiments of the present invention may be implemented by using a hardware integrated logic circuit in the processor and/or implemented by using an instruction in a software form. Steps of the methods disclosed with reference to the embodiments of the present invention may be directly executed and completed by means of a hardware decoding processor, or may be executed and completed by using a combination of hardware and software modules in the decoding processor.

Optionally, the software module may be located in a mature storage medium in the field, such as a random access memory, a flash memory, a read-only memory, a programmable read-only memory, an electrically-erasable programmable memory, or a register. The storage medium is located in the memory, and the processor reads information in the memory and completes the steps in the foregoing method embodiments in combination with hardware of the processor.

For example, in this embodiment of the present invention, the communications unit 310 shown in FIG. 3 and the communications unit 420 shown in FIG. 4 may be implemented by a transceiver, and the obtaining unit 320 shown in FIG. 3 and the determining unit 410 shown in FIG. 4 may be implemented by a processor.

FIG. 5 is a schematic structural diagram of a communications device 500 according to an embodiment of this application. The communications device 500 shown in FIG. 5 includes a processor 510. The processor 510 may invoke a computer program from a memory and run the computer program, to implement the method in the embodiments of this application.

Optionally, as shown in FIG. 5, the communications device 500 may further include a memory 520. The memory 520 may be configured to store indication information, and may be further configured to store code, an instruction, or the like executed by the processor 510. The processor 510 may invoke the computer program from the memory 520 and run the computer program, to implement the method in the embodiments of this application.

The memory 520 may be a component independent of the processor 510, or may be integrated into the processor 510.

Optionally, as shown in FIG. 5, the communications device 500 may further include a transceiver 530, and the processor 510 may control the transceiver 530 to communicate with another device and specifically may send information or data to another device or receive information or data sent by another device.

The transceiver 530 may include a transmitter and a receiver. The transceiver 530 may further include one or more antennas.

Optionally, the communications device 500 may be the network device of the embodiments of this application, and the communications device 500 may implement a corresponding process implemented by the network device in each method of the embodiments of this application. In other words, the communications device 500 according to this embodiment of this application may correspond to the communications device 400 in the embodiments of this application, and may correspond to a corresponding body in the method 200 according to the embodiments of this application. For simplicity, details are not described herein again.

Optionally, the communications device 500 may be the terminal device of the embodiments of this application, and the communications device 500 may implement a corresponding process implemented by the terminal device in each method of the embodiments of this application. In other words, the communications device 500 according to this embodiment of this application may correspond to the terminal device 300 in the embodiments of this application, and may correspond to a corresponding body in the method 200 according to the embodiments of this application. For simplicity, details are not described herein again.

It should be understood that, components in the communications device 500 are connected to each other through a bus system, where in addition to a data bus, the bus system further includes a power bus, a control bus, and a status signal bus.

Moreover, an embodiment of the present invention further provides a chip. The chip may be an integrated circuit chip, has a signal processing capability, and can implement or perform various methods, steps, and logical block diagrams disclosed in the embodiments of the present invention.

Optionally, the chip may be applied to various communications devices, so that a communications device in which the chip is installed can perform various methods, steps, and logical block diagrams disclosed in the embodiments of the present invention.

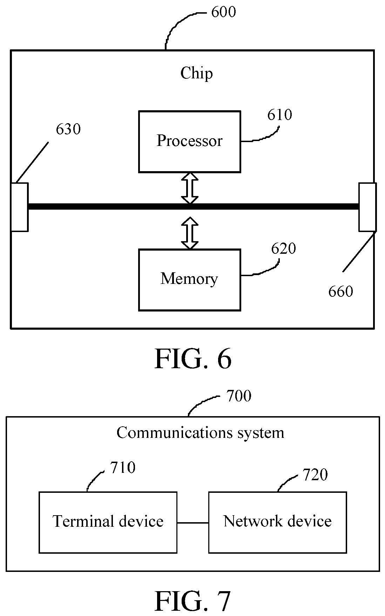

FIG. 6 is a schematic structural diagram of a chip according to an embodiment of this application.

The chip 600 shown in FIG. 6 includes a processor 610. The processor 610 may invoke a computer program from a memory and run the computer program, to implement the method in the embodiments of this application.

Optionally, as shown in FIG. 6, the chip 600 may further include a memory 620. The processor 610 may invoke the computer program from the memory 620 and run the computer program, to implement the method in the embodiments of this application. The memory 620 may be configured to store indication information, and may be further configured to store code, an instruction, or the like executed by the processor 610.

The memory 620 may be a component independent of the processor 610, or may be integrated into the processor 610.

Optionally, the chip 600 may further include an input interface 630. The processor 610 may control the input interface 630 to communicate with another device or chip, and may specifically obtain information or data sent by the another device or chip.

Optionally, the chip 600 may further include an output interface 640. The processor 610 may control the output interface 640 to communicate with another device or chip, and may specifically output information or data to the another device or chip.

Optionally, the chip may be applied to the network device in the embodiments of this application, and the chip can implement corresponding procedures implemented by the network device in various methods in the embodiments of this application. For brevity, details are not described herein again.

Optionally, the chip may be applied to the terminal device in the embodiments of this application, and the chip can implement corresponding procedures implemented by the terminal device in various methods in the embodiments of this application. For brevity, details are not described herein again.

It should be understood that, the chip mentioned in the embodiments of this application may also be referred to as a system-level chip, a system chip, a chip system, a system on chip, or the like. It should be further understood that, components of the chip 600 are connected to each other by using a bus system. In addition to including a data bus, the bus system further includes a power bus, a control bus, and a status signal bus.

The processor mentioned in the embodiments of the present invention may be a general purpose processor, a digital signal processor (DSP), an application-specific integrated circuit (ASIC), a field programmable gate array (FPGA), or another programmable logical device, or transistor logical device, or discrete hardware component. Moreover, the general purpose processor may be a microprocessor or the processor may be any conventional processor and the like.

In addition, it may be understood that the memory mentioned in the embodiments of the present invention may be a volatile memory or a nonvolatile memory, or may include a volatile memory and a nonvolatile memory. The non-volatile memory may be a read-only memory (ROM), a programmable read-only memory (PROM), an erasable programmable read-only memory (EPROM), an electrically erasable programmable read-only memory (EEPROM) or a flash memory. The volatile memory may be a random access memory (RAM), and is used as an external cache.

It should be understood that, the foregoing memory is described as an example other than a limitation. For example, the memory in this embodiment of the present invention may be further a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), a direct rambus random access memory (DR RAM), or the like. That is, the memory of the systems and methods described in this specification includes but is not limited to those and any memory of another proper type.

FIG. 7 is a schematic block diagram of a communications system 700 according to an embodiment of this application. As shown in FIG. 7, the communications system 700 may include a terminal device 710 and a network device 720. The network device 720 is configured to send, when determining to update system broadcast information, dedicated signaling to the terminal device in connected mode; and the terminal device 710 is configured to: receive the dedicated signaling sent by the network device, and obtain the updated system broadcast information according to the dedicated signaling.

The terminal device 710 may be configured to implement a corresponding function, implemented by the terminal device, in the foregoing method 200, and the composition of the terminal device 710 may be shown as that of the communications device 300 in FIG. 3. For brevity, details are not described herein again.

The network device 720 may be configured to implement a corresponding function, implemented by the network device, in the foregoing method 200, and the composition of the network device 720 may be shown as that of the communications device 400 in FIG. 4. For brevity, details are not described herein again.

It should be noted that, a term "system" or the like in this specification may also be referred to as a "network management architecture", a "network system" or the like.

It should be further understood that, the terms used in the embodiments and the appended claims of the present invention are merely for describing specific embodiments, but are not intended to limit the embodiments of the present invention.

For example, the terms "a", "said", "foregoing" and "the" of singular forms used in the embodiments and the appended claims of the present invention are also intended to include plural forms, unless otherwise specified in the context clearly.

A person skilled in the art may be aware that, in combination with the examples described in the embodiments disclosed in this specification, units and algorithm steps may be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the embodiments of the present invention.

When the functional units are implemented in a form of a software functional module and sold or used as an independent product, the functional units may be stored in a computer-readable storage medium. Based on such an understanding, the technical solutions of the embodiments of the present invention essentially, or the part contributing to the prior art, or part of the technical solutions may be implemented in the form of a software product. The computer software product is stored in a storage medium, and includes several instructions for instructing a computer device (which may be a personal computer, a server, a network device, and the like) to perform all or a part of the steps of the method described in the embodiments of the present invention. The foregoing storage medium includes: any medium that can store program codes, such as a USB flash disk, a removable hard disk, a read-only memory, a random access memory, a magnetic disk, or an optical disk.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners.

For example, the unit or module or component division in the foregoing apparatus embodiment is merely logical function division and may be other division in actual implementation. For example, a plurality of units or modules or components may be combined or integrated into another system, or some units or modules or components may be ignored or not performed.

For another example, the units/modules/components described as separate/display parts may or may not be physically separate, and may be located in one position, or may be distributed on a plurality of network units. Some or all of the units/modules/components may be selected according to actual needs to achieve the objectives of the embodiments of the present invention.

Finally, it should be noted that, the displayed or discussed mutual couplings or direct couplings or communication connections may be implemented through some interfaces. The indirect couplings or communication connections between the apparatuses or units may be implemented in electrical, mechanical or other forms.

The foregoing content is merely specific implementations of the embodiments of the present invention, but is not intended to limit the protection scope of the embodiments of the present invention. Any variation or replacement readily figured out by a person skilled in the art within the technical scope disclosed in the embodiments of the present invention shall fall within the protection scope of the embodiments of the present invention. Therefore, the protection scope of the embodiments of the present invention shall be subject to the protection scope of the claims.

## Claims

1. A wireless communications method, wherein the method is applied to a terminal device in connected mode, and the method comprises:
receiving, by the terminal device, dedicated signaling sent by a network device; and
obtaining, by the terminal device, updated system broadcast information according to the dedicated signaling.

2. The method according to claim 1, wherein the dedicated signaling comprises the updated system broadcast information.

3. The method according to claim 2, wherein before the receiving, by the terminal device, dedicated signaling sent by a network device, the method further comprises:
receiving, by the terminal device, first indication information sent by the network device, wherein the first indication information is used for instructing the terminal device to stop monitoring a downlink control channel through a paging-radio network temporary identifier (P-RNTI) and/or a system information-radio network temporary identifier (SI-RNTI).

4. The method according to claim 1, wherein the dedicated signaling comprises system broadcast change indication information;
the obtaining, by the terminal device, updated system broadcast information according to the dedicated signaling comprises:
monitoring, by the terminal device, a downlink control channel on a next periodic boundary of system broadcast through an SI-RNTI according to the system broadcast change indication information in the dedicated signaling, to obtain the updated system broadcast information; and
the method further comprises:
stopping, by the terminal device after obtaining the updated system broadcast information, monitoring the downlink control channel through the SI-RNTI.

5. The method according to claim 4, wherein before the receiving, by the terminal device, dedicated signaling sent by a network device, the method further comprises:
receiving, by the terminal device, second indication information sent by the network device, wherein the second indication information is used for instructing the terminal device to stop monitoring a downlink control channel through a P-RNTI.

6. The method according to claim 4 or 5, wherein the system broadcast change indication information comprises at least one of the following indication information:
system information (SI) change indication information, change indication information of each system information block (SIB), earthquake and tsunami warning system (ETWS) change indication information, and commercial mobile alert system (CMAS) change indication information.

7. The method according to any one of claims 1 to 6, wherein the dedicated signaling comprises: dedicated downlink control information (DCI) signaling and/or dedicated radio resource control (RRC) signaling.

8. A wireless communications method, comprising:
determining, by a network device, to update system broadcast information; and
sending, by the network device, dedicated signaling to a terminal device in connected mode, wherein the dedicated signaling is used by the terminal device to obtain the updated system broadcast information.

9. The method according to claim 8, wherein the dedicated signaling comprises the updated system broadcast information.

10. The method according to claim 9, wherein before the sending, by the network device, dedicated signaling to a terminal device, the method further comprises:
generating, by the network device, first indication information, wherein the first indication information is used for instructing the terminal device to stop monitoring a downlink control channel through a paging-radio network temporary identifier (P-RNTI) and/or a system information-radio network temporary identifier (SI-RNTI); and
sending, by the network device, the first indication information to the terminal device.

11. The method according to claim 8, wherein the dedicated signaling comprises system broadcast change indication information.

12. The method according to claim 11, wherein before the sending, by the network device, dedicated signaling to a terminal device, the method further comprises:
generating, by the network device, second indication information, wherein the second indication information is used for instructing the terminal device to stop monitoring a downlink control channel through a P-RNTI; and
sending, by the network device, the second indication information to the terminal device.

13. The method according to claim 11 or 12, wherein the system broadcast change indication information comprises at least one of the following indication information:
system information (SI) change indication information, change indication information of each system information block (SIB), earthquake and tsunami warning system (ETWS) change indication information, and commercial mobile alert system (CMAS) change indication information.

14. The method according to any one of claims 8 to 13, wherein the dedicated signaling comprises: dedicated downlink control information (DCI) signaling and/or dedicated radio resource control (RRC) signaling.

15. A communications device, wherein the communications device is a terminal device in connected mode, and the communications device comprises:
a communications unit, configured to receive dedicated signaling sent by a network device; and
an obtaining unit, configured to obtain updated system broadcast information according to the dedicated signaling.

16. The communications device according to claim 15, wherein the dedicated signaling comprises the updated system broadcast information.

17. The communications device according to claim 16, wherein the communications unit is further configured to:
receive, before receiving the dedicated signaling sent by the network device, first indication information sent by the network device, wherein the first indication information is used for instructing the terminal device to stop monitoring a downlink control channel through a paging-radio network temporary identifier (P-RNTI) and/or a system information-radio network temporary identifier (SI-RNTI).

18. The communications device according to claim 15, wherein the dedicated signaling comprises system broadcast change indication information;
the obtaining unit is specifically configured to:
monitor a downlink control channel on a next periodic boundary of system broadcast through an SI-RNTI according to the system broadcast change indication information in the dedicated signaling, to obtain the updated system broadcast information; and
the communications unit is further configured to:
stop, by the terminal device after obtaining the updated system broadcast information, monitoring the downlink control channel through the SI-RNTI.

19. The communications device according to claim 18, wherein the communications unit is further configured to:
receive, before receiving the dedicated signaling sent by the network device, second indication information sent by the network device, wherein the second indication information is used for instructing the terminal device to stop monitoring a downlink control channel through a P-RNTI.

20. The communications device according to claim 18 or 19, wherein the system broadcast change indication information comprises at least one of the following indication information:
system information (SI) change indication information, change indication information of each system information block (SIB), earthquake and tsunami warning system (ETWS) change indication information, and commercial mobile alert system (CMAS) change indication information.

21. The communications device according to any one of claims 15 to 20, wherein the dedicated signaling comprises: dedicated downlink control information (DCI) signaling and/or dedicated radio resource control (RRC) signaling.

22. A communications device, comprising:
a determining unit, configured to determine to update system broadcast information; and
a communications unit, configured to send dedicated signaling to a terminal device in connected mode, wherein the dedicated signaling is used by the terminal device to obtain the updated system broadcast information.

23. The communications device according to claim 22, wherein the dedicated signaling comprises the updated system broadcast information.

24. The communications device according to claim 23, wherein before the communications unit sends the dedicated signaling to the terminal device, the determining unit is further configured to:
generate first indication information, wherein the first indication information is used for instructing the terminal device to stop monitoring a downlink control channel through a paging-radio network temporary identifier (P-RNTI) and/or a system information-radio network temporary identifier (SI-RNTI); and
the communications unit is further configured to send the first indication information to the terminal device.

25. The communications device according to claim 22, wherein the dedicated signaling comprises system broadcast change indication information.

26. The communications device according to claim 25, wherein before the communications unit sends the dedicated signaling to the terminal device, the determining unit is further configured to:
generate second indication information, wherein the second indication information is used for instructing the terminal device to stop monitoring a downlink control channel through a P-RNTI; and
the communications unit is further configured to send the second indication information to the terminal device.

27. The communications device according to claim 25 or 26, wherein the system broadcast change indication information comprises at least one of the following indication information:
system information (SI) change indication information, change indication information of each system information block (SIB), earthquake and tsunami warning system (ETWS) change indication information, and commercial mobile alert system (CMAS) change indication information.

28. The communications device according to any one of claims 22 to 27, wherein the dedicated signaling comprises: dedicated downlink control information (DCI) signaling and/or dedicated radio resource control (RRC) signaling.

29. A communications device, comprising:
a processor, configured to invoke a computer program from a memory and run the computer program, wherein the computer program comprises an instruction used to perform the method according to any one of claims 1 to 14.

30. A chip, comprising:
a processor, configured to invoke a computer program from a memory and run the computer program, wherein the computer program comprises an instruction used to perform the method according to any one of claims 1 to 14.

31. A storage medium, wherein the storage medium is configured to store the computer program, and the computer program comprises an instruction used to perform the method according to any one of claims 1 to 14.

32. A communications system, comprising:
a network device and a terminal device, wherein
the network device is configured to send, when determining to update system broadcast information, dedicated signaling to the terminal device in connected mode; and
the terminal device is configured to: receive the dedicated signaling sent by the network device, and obtain the updated system broadcast information according to the dedicated signaling.
